**Europäisches Patentamt**

**European Patent Office**

**Office européen des brevets**

(19)

(11) Veröffentlichungsnummer: **0 236 777**

**A1**

(12) # EUROPÄISCHE PATENTANMELDUNG

(21) Anmeldenummer: **87102035.0**

(22) Anmeldetag: **13.02.87**

(51) Int. Cl.⁴: **G01B 11/03**

(30) Priorität: **18.02.86 DE 3605107**

(43) Veröffentlichungstag der Anmeldung:
**16.09.87 Patentblatt 87/38**

(84) Benannte Vertragsstaaten:
**AT CH DE ES FR GB IT LI NL SE**

(71) Anmelder: **ELGEMA**
**Elektronik-Gerätebau-Mainburg GmbH**
**Erfurter Strasse 29**
**D-8057 Eching(DE)**

(72) Erfinder: **Wagensommer, Ulrich**
**Heiligenberger Str. 103**
**D-7777 Salem- Weildorf(DE)**

(74) Vertreter: **Wuesthoff, Franz, Dr.-Ing. et al**
**Patentanwälte Wuesthoff -v.**
**Pechmann-Behrens-Goetz Schweigerstrasse**
**2**
**D-8000 München 90(DE)**

(54) **Vorrichtung zum Vermessen und Positionieren.**

(57) Eine Vorrichtung zum Vermessen von Werkstücken weist einen Tastkopf (10) auf, der keine mechanische Verbindung zu einem Meß-Schlitten - (14) hat. Ein Laserstrahl (20) wird auf einen Spiegel (18) am Tastkopf (10) gerichtet und nach Reflexion auf photoelektrische Wandler (S1, S2) gelenkt. Bei einer Bewegung des Tastkopfes (10) ändert sich die Position des reflektierten Strahles (24, 24', 24"), was mittels der photoelektrischen Wandler (S1, S2) festgestellt wird. Der Schlitten (14) wird entsprechend der Bewegung des Tastkopfes (10) nachgeführt und die vom Schlitten 14 zurückgelegte Wegstrecke ( x) kann präzise gemessen werden, woraus sich die Bewegung des Tastkopfes (10) ergibt. Die Vorrichtung benötigt keine aufwendige mechanische Führung des Tastkopfes (10), ermöglicht eine hohe Antastgeschwindigkeit und läßt sich auch zum Positionieren von Werkzeugen verwenden.

FIG.1

## Vorrichtung zum Vermessen und Positionieren

Die Erfindung betrifft eine Vorrichtung zum Vermessen von insbesondere Werkstücken mit einem Tastkopf zum Abtasten des Werkstückes, einem Antrieb für den Tastkopf und einer Meßeinrichtung zum Bestimmen einer vom Tastkopf zurückgelegten Wegstrecke ( x). Ebenso betrifft die Erfindung eine Vorrichtung zum Positionieren insbesondere eines Werkzeuges mit einem Werkzeugträger, einem Antrieb für den Werkzeugträger und einer Meßeinrichtung zum Bestimmen einer vom Werkzeugträger zurückgelegten Wegstrecke.

Bei bekannten Meßvorrichtungen zum Vermessen von Werkstücken mit einem mechanischen Tastkopf, welcher das Werkstück abtastet, wird der Tastkopf mittels einer aufwendigen hochpräzisen Führung gesteuert. Um eine hohe Meßgenauigkeit zu erzielen, müssen sehr genaue Führungen und steife Führungslager verwendet werden. Ein wesentlicher Nachteil derartiger bekannter Meßvorrichtungen ist darin zu sehen, daß die hochpräzisen Führungen sehr kostenaufwendig sind. Auch bedingen die aufwendigen Führungen, daß relativ große Massen bewegt werden, wodurch nur mit einer niedrigen Antastgeschwindigkeit gearbeitet werden kann.

Der Erfindung liegt die Aufgabe zugrunde, eine Vorrichtung zum Vermessen von insbesondere Werkstücken sowie eine Vorrichtung zum Positionieren von insbesondere Werkzeugen mit den Merkmalen des Oberbegriffes des Patentanspruches 1 bzw. 2 derart weiter zubilden, daß auf hochpräzise mechanische Führungen weitgehend verzichtet werden kann, wobei eine hohe Antastgeschwindigkeit ermöglicht sein soll.

Eine erfindungsgemäße Vorrichtung zum Vermessen von insbesondere Werkstücken löst diese Aufgabe dadurch, daß der Tastkopf mit einem Spiegel versehen ist, daß ein elektromagnetischer Strahl, wie z.B. ein Laser-Lichtstrahl, auf den Spiegel gerichtet ist und daß die Änderung des reflektierten Strahles bei Bewegung des Tastkopfes mittels zumindest eines photoelektrischen Wandlers gemessen wird.

Bei einer Vorrichtung zum Positionieren von insbesondere Werkzeugen wird erfindungsgemäß diese Aufgabe dadurch gelöst, daß der Werkzeugträger mit einem Spiegel versehen ist, daß ein elektromagnetischer Strahl, wie z.B. ein Laser-Lichtstrahl, auf den Spiegel gerichtet ist und daß die Änderung des reflektierten Strahles bei Bewegung des Werkzeugträgers mittels zumindest eines photoelektrischen Wandlers gemessen wird.

Erfindungsgemäß weist also der Tastkopf bzw. der Werkzeugträger keine mechanische Verbindung zu der eigentlichen Meßeinrichtung auf. Die Kopplung erfolgt führungsunabhängig über einen Strahl, wie vorzugsweise einen Laser-Lichtstrahl.

In einer bevorzugten Ausgestaltung der Erfindung ist vorgesehen, daß der oder die photoelektrische(n) Wandler auf einem Schlitten angeordnet ist (sind), daß der Schlitten mit einem Antrieb versehen ist, daß die Position des Schlittens entsprechend der Änderung des reflektierten Strahles gesteuert wird und daß die vom Schlitten zurückgelegte Wegstrecke gemessen wird.

Es ist auch möglich, die photoelektrischen Wandler nicht fest am beweglichen Schlitten anzuordnen, sondern vielmehr ortsfest zu positionieren, wobei auf dem Schlitten ein Spiegel befestigt ist, der den vom Tastkopf reflektierten Strahl auf den oder die ortsfesten photoelektrischen Wandler lenkt. Der Schlitten wird entsprechend der Bewegung des vom Tastkopf bzw. Werkzeugträger reflektierten Strahles derart nachgeführt, daß das Ausgangssignal des photoelektrischen Wandlers oder mehrerer photoelektrischer Wandler unverändert bleibt. Die Bewegung des Schlittens entspricht dann der Bewegung des Tastkopfes, so daß es genügt, die Bewegung des Schlittens hochpräzise zu messen.

Bevorzugt sind die Bewegungsrichtungen des Tastkopfes bzw. Werkzeugträgers und des Schlittens parallel. Der Laserstrahl wird in einer vorteilhaften Ausgestaltung der Erfindung auf ein am Schlitten befestigtes Pentaprisma gelenkt, so daß seine 90°-Ablenkung unabhängig von der Lage des Schlittens ist.

Falls die Bewegungsrichtungen des Tastkopfes bzw. Werkzeugträgers und des Schlittens nicht exakt parallel zueinander sind, wird mittels des Schlittens nur die parallele Bewegungskomponente gemessen. Aus der parallelen Bewegungskomponente läßt sich dann bei bekanntem Winkel zwischen den Bewegungen des Tastkopfes bzw. Werkzeugträgers und des Schlittens die tatsächliche Bewegung des Tastkopfes bzw. Werkzeugträgers ermitteln.

Die Ansprüche an die mechanische Führung des Tastkopfes bzw. des Werkzeugträgers lassen sich dadurch senken, daß in einer Meßrichtung zwei parallele Laserstrahlen vertikal zueinander versetzt auf den Spiegel am Tastkopf bzw. Werkzeugträger gerichtet werden, so daß ein Verkippen des Tastkopfes bzw. Werkzeugträgers in bezug zum Schlitten anhand der Ausgangssignale der vertikal übereinander angeordneten photoelektrischen Wandler festgestellt und entsprechend korrigiert werden kann.

Beim Positionieren eines Werkzeuges kann der Positions-Sollwert an einer dem Schlitten zugeordneten Meßskala vorgegeben werden, worauf der Werkzeugträger derart nachgeführt wird, daß er die vorgegebene Soll-Position einnimmt.

Eine besonders einfache Anordnung der photoelektrischen Wandler und des Schlittens ergibt sich dann, wenn der vom Spiegel des Tastkopfes bzw. Werkzeugträgers reflektierte Strahl parallel zu dem auf denselben einfallenden Strahl verläuft.

Als photoelektrischer Wandler ist bevorzugt ein Zwei-Quadranten-Detektor vorgesehen und die Nachführung des Schlittens erfolgt derart, daß das Ausgangssignal des Zwei-Quadranten-Detektors verarbeitet wird. Beispielsweise soll eine Koordinierung des Tastkopfes bzw. Werkzeugträgers in bezug auf den Schlitten dann vorliegen, wenn die Differenz der Ausgangssignale des Zwei-Quadranten-Detektors Null ist.

Die Bewegung des Schlittens relativ zu einer Meßskala läßt sich mit bekannten Mitteln hochpräzise messen.

Die erfindungsgemäße Meß-bzw. Positioniervorrichtung läßt sich auch zum zwei-und dreidimensionalen Messen bzw. Positionieren einsetzen. Hierzu werden zwei bzw. drei Meß-Schlitten orthogonal zueinander bewegt.

Die Erfindung schafft auch einen für die vorstehend beschriebenen Vorrichtungen besonders geeigneten Tastkopf, der mit sehr hoher Geschwindigkeit an das zu vermessende Werkstück herangeführt werden kann.

Nachfolgend sind Ausführungsbeispiele der Erfindung anhand der Zeichnung näher beschrieben. Es zeigt bzw. zeigen:

Fig. 1 schematisch eine eindimensionale Meßvorrichtung;

Fig. 2 eine zweidimensionale Meßvorrichtung;

Fig. 3 ein weiteres Ausführungsbeispiel einer eindimensionalen Meßvorrichtung;

Fig. 4 bis 10 schematisch unterschiedliche Meßanordnungen; und

Fig. 11 und 12 schematisch einen Tastkopf.

In der nachfolgenden Figurenbeschreibung ist die Erfindung anhand einer Meßvorrichtung zum Vermessen von insbesondere Werkstücken beschrieben. Dabei wird die Bewegung eines Tastkopfes mit einer Genauigkeit gemessen, die besser ist als 1 $\mu$m. Statt des Tastkopfes kann aber auch ein Werkzeugträger mit einem Werkzeug vorgesehen sein. Die nachfolgend für einen Tastkopf beschriebenen Verhältnisse lassen sich analog auf einen Werkzeugträger übertragen.

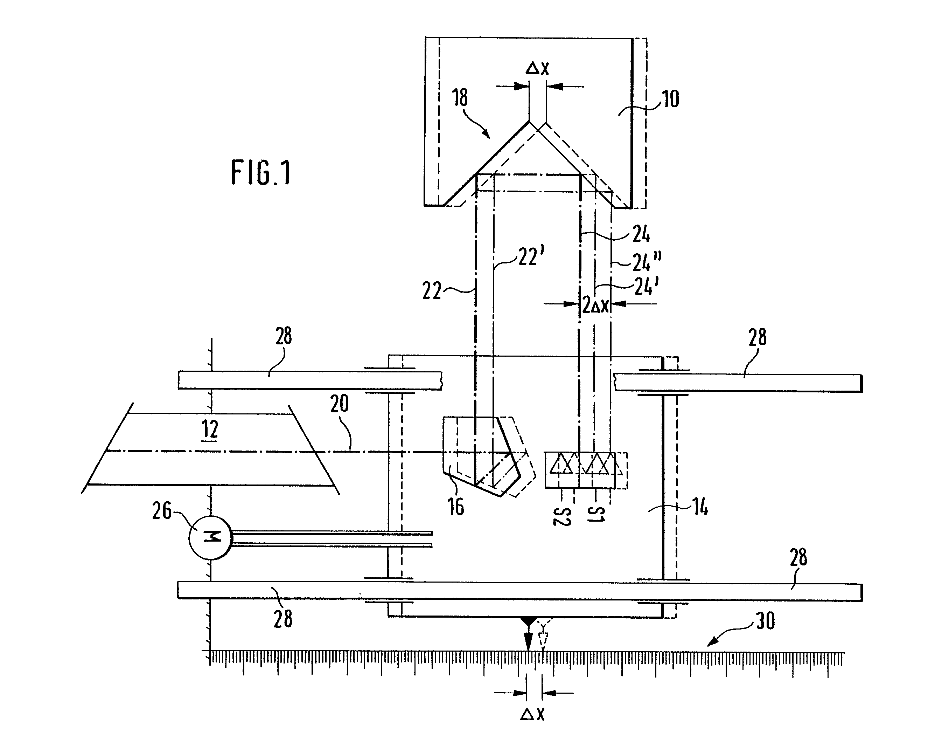

Die Meßvorrichtung weist gemäß Fig. 1, in welcher das Prinzip einer eindimensionalen Messung dargestellt ist, einen Tastkopf 10, einen Laser 12 und einen Schlitten 14 auf. Der Schlitten 14 ist mit einem als Pentaprisma 16 ausgebildeten Umlenkspiegel sowie mit photoelektrischen Wandlern S1, S2 versehen. In der Zeichnung ist eine Ausgangsposition des Tastkopfes 10 und des Schlittens 14 mit durchgezogenen Linien dargestellt, während eine weitere Position der beiden Bauteile mit gestrichelten Linien gezeigt ist. Der Tastkopf 10 ist mit einem Spiegel 18 versehen, der im Ausführungsbeispiel gemäß Fig. 1 ein Winkelspiegel (Retroreflektor) ist.

Der Strahl 20 des Lasers 12 fällt auf das Pentaprisma 16 und wird um 90° in Richtung auf den Tastkopf 10 umgelenkt. Die Bewegungsrichtung des Tastkopfes 10 (dessen Antrieb nicht dargestellt ist) ist beim dargestellten Ausführungsbeispiel parallel zur Bewegungsrichtung des Schlittens 14, der sich entlang der Schienen 28 bewegt. Das Pentaprisma 16 gewährleistet unabhängig von der genauen Lage des Schlittens 14 in jedem Falle eine 90°-Umlenkung des Strahles 20 des Lasers 12. Der umgelenkte Strahl 22 trifft auf die in Fig. 1 linke Seite des Winkelspiegels 18 und wird nach einer weiteren Reflexion an der gegen überliegenden Seite um genau 180° zurückgelenkt. Der vom Spiegel 18 des Tastkopfes 10 reflektierte Strahl 24, 24', 24" ist also zum einfallenden Strahl 22, 22' parallel.

Wie in Fig. 1 dargestellt, entspricht einer Verschiebung des Tastkopfes 10 um das Wegstück x eine Verschiebung des reflektierten Strahles 24, 24', 24" um 2 x. In der Ausgangsstellung (in Fig. 1 mit durchgezogenen Linien dargestellt) trifft der vom Tastkopf 10 reflektierte Strahl 24 genau derart auf den Zwei-Quadranten-Detektor S1, S2, daß dessen Ausgangssignal genau symmetrisch ist, d.h. die Differenz der Ausgangssignale der einzelnen photoelektrischen Wandler S1, S2 ist genau Null. Sobald der Tastkopf 10 in Richtung "x" bewegt wird, ändert sich das Ausgangssignal der beiden Detektoren S1, S2. Mittels des Antriebs 26 des Schlittens 14 wird die Position des Schlittens 14 so nachgeregelt, daß die Ausgangssignale der beiden photoelektrischen Wandler S1, S2 gleich dem Ausgangswert bleiben. Hierzu muß der Meßschlitten 14 um genau die gleiche Wegstrecke x verschoben werden wie der Tastkopf 10. Die Bewegung des Schlittens 14 läßt sich in bekannter Weise hochpräzise mit einer Genauigkeit besser als 1 $\mu$m an der Meßskala 30 ablesen.

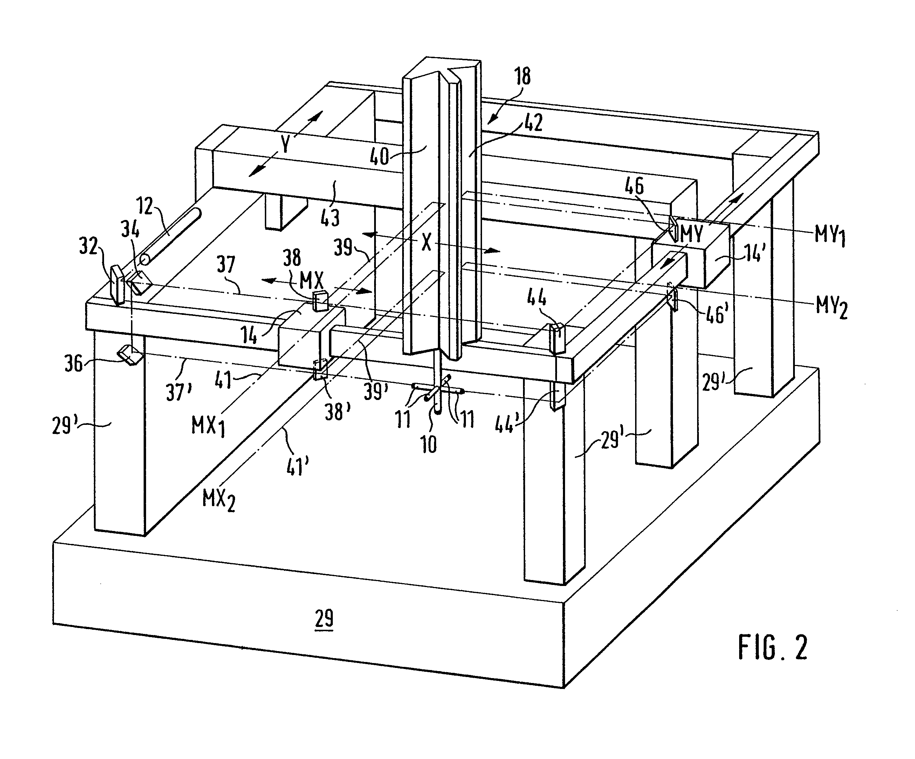

Fig. 2 zeigt eine zweidimensionale Meßanordnung, bei der überdies die Ansprüche an die mechanische Führung des Tastkopfes 10 durch opto-elektronische Maßnahmen reduziert sind.

Auf einer Basis 29 und Stützen 29' sind die optischen Bauteile sowie der Tastkopf 10 abgestützt. Der Tastkopf 10 weist eine Spitze sowie horizontal ausgerichtete Arme 11 auf. Fest mit dem Tastkopf 10 verbunden ist der Spiegel 18, welcher weiter unten näher beschrieben wird.

Der Ausgangsstrahl des Lasers 12 trifft auf einen Umlenkspiegel 32 und auf einen halbdurchlässigen Spiegel 34. Ein Teilstrahl wird gemäß Fig. 2 vom halbdurchlässigen Spiegel 34 nach unten auf einen Umlenkspiegel 36 gerichtet. Der Ausgangsstrahl des Lasers 12 wird somit auf zwei vertikal versetzte Ebenen verteilt. Die beiden Teil-Strahlen 37, 37' treffen auf zwei halbdurchlässige Spiegel 38, 38'. Die durch die halbdurchlässigen Spiegel 38, 38' um 90° umgelenkten Teil-Strahlen 39, 39' treffen auf einen ersten Retrospiegel 40, der fest mit dem Tastkopf 10 verbunden ist. Die reflektierten Strahlen 41, 41' sind vertikal zueinander versetzt und treffen jeweils auf Zwei-Quadranten-Detektoren (nicht gezeigt) und werden analog Fig. 1 verarbeitet. Somit ermöglicht der erste Meßschlitten 14, mit dem die beiden halbdurchlässigen Spiegel 38, 38' verbunden sind, eine Messung MX in X-Richtung.

Die Anordnung zweier vertikal übereinanderliegender Laserstrahlen 39, 39' ermöglicht es, ein Verkippen des Tastkopfes 10 in bezug auf den Meß-Schlitten 14 festzustellen. Hierdurch ist es möglich, die Lage des Tastkopfes 10 völlig führungsunabhängig zu ermitteln. Ist nämlich der Tastkopf 10 in bezug auf die Vertikale verkippt, so unterscheidet sich das Signal $MX_1$ vom Signal $MX_2$. Im einzelnen wird die neue Lage des nachgeführten Schlittens 14 nach einer Bewegung des Tastkopfes 10 festgehalten und es wird zusätzlich die Meßebene bestimmt als die Mittellage zwischen den Höhen der Rückstrahlen $MX_1$ und $MX_2$, die vom ersten Retrospiegel 40 reflektiert werden. Die Winkellage des Tastkopfes 10 in bezug auf den Schlitten 14 läßt sich aus dem Quotienten der Differenz zwischen den Lagen der Rückstrahlen $MXh_1$, $MX_2$ und dem Abstand zwischen diesen beiden Rückstrahlen ermitteln. Aus den Quotienten der Differenz zwischen den Positionen der durch die Strahlteiler 38, 38' abgelenkten Laserstrahlen auf den photoelektrischen Wandlern und dem Abstand zwischen den Laserstrahlen wird die Winkellage des Schlittens 14 in bezug auf die Meßebene ermittelt. Die Verkippung des Tastkopfes 10 kann nunmehr anhand des Abstands zwischen dem Tastkopf 10 und der Meßebene sowie der bekannten Winkellage des Spiegels 18 zur Meßebene ermittelt werden.

In Y-Richtung erfolgt eine entsprechende Messung. Hierzu werden die durch die halbdurchlässigen Spiegel 38, 38' durchgelassenen Strahlen auf zwei Umlenkspiegel 44, 44' gelenkt und nach einer weiteren 90°-Umlenkung an den Umlenkspiegeln 46, 46' auf einen zweiten Retrospiegel 42 gelenkt, wo sie reflektiert werden. Die beiden vertikal zueinander versetzten reflektierten Strahlen $MY_1$ und $MY_2$ treffen jeweils ebenfalls auf - (nicht gezeigte) Zwei-Quadranten-Detektoren und werden ebenso verarbeitet, wie es vorstehend anhand der in X-Richtung gemessenen Werte beschrieben worden ist. Der zweite Schlitten 14' ermöglicht somit eine Messung in Y-Richtung.

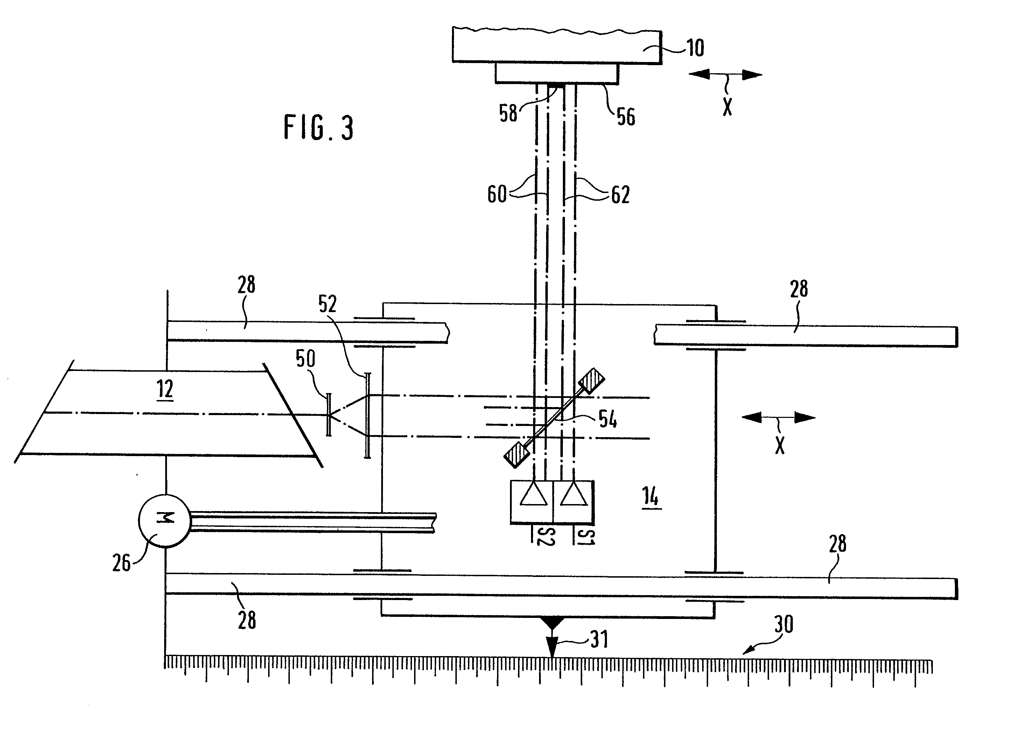

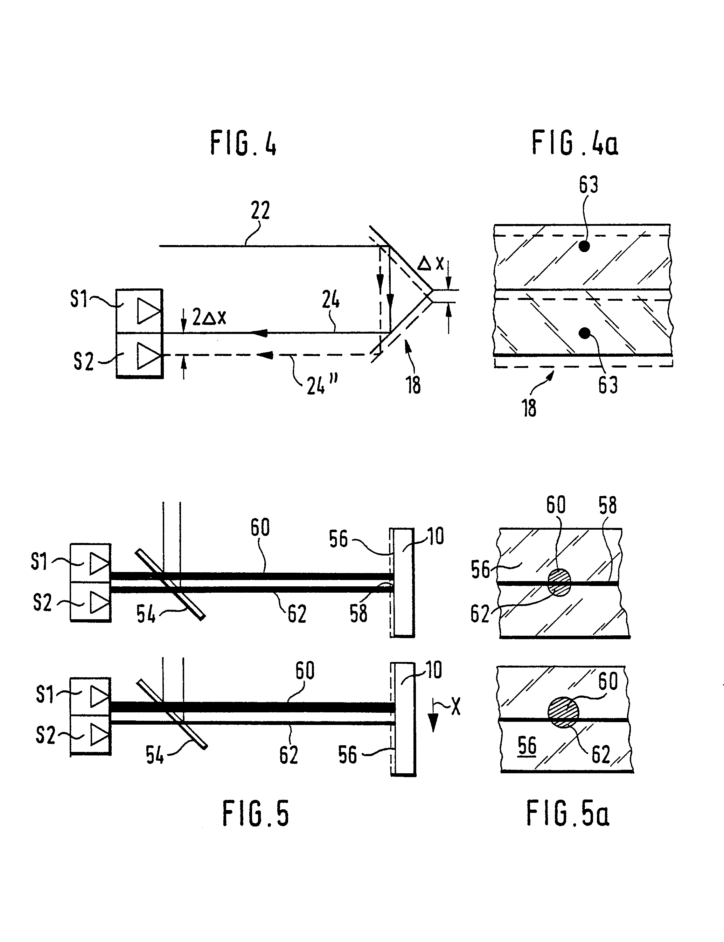

Fig. 3 zeigt ein weiteres Ausführungsbeispiel einer Meßvorrichtung, bei der ein anderer Strahlengang vorgesehen ist. Der Ausgangsstrahl des Lasers 12 wird mittels zweier Linsen 50, 52 gemäß Fig. 3 aufgeweitet und trifft auf einen halbdurchlässigen Spiegel 54. Am halbdurchlässigen Spiegel 54 wird ein Teil des aufgeweiteten Laserstrahles um 90° umgelenkt und auf einen Plan-Spiegel 56 am Tastkopf 10 gerichtet. Der Plan-Spiegel 56 weist einen Schattenbalken (s.a. Fig. 5) auf. Der aufgeweitete, auf den Plan-Spiegel 56 einfallende Lichtstrahl überlappt den Schattenbalken 58 auf beiden Seiten. Der Schlitten 14 ist derart in bezug auf den Schattenbalken 58 ausgerichtet, daß die beiden vom Plan-Spiegel 56 reflektierten Teil-Strahlen 60 und 62 genau symmetrisch auf die beiden photoelektrischen Wandler S1, S2 des Zwei-Quadranten-Detektors fallen. Der Schlitten 14 ist also derart in bezug auf den Meßkopf 10 ausgerichtet, daß die Differenz der Ausgangssignale der beiden photoelektrischen Wandler S1, S2 zu Null wird. Bei einer Bewegung des Tastkopfes 10 in Richtung "X" wird somit auch der Schlitten 14 mittels des Antriebs 26 um genau die gleiche Wegstrecke verschoben, was an der Meßskala 30 mittels des Pfeiles 31 in bekannter Weise auf weniger als 1 μm abgelesen werden kann.

Die Fig. 4 bis 10 zeigen schematisch verschiedene Meß-Varianten.

Die Messung gemäß Fig. 4 und 4a entspricht dem anhand der Fig. 1 erläuterten Ausführungsbeispiel. Fig. 4a zeigt die Positionen 63 des auf den Winkel-Spiegel 18 einfallenden bzw. reflektier ten Strahles. Wird der Tastkopf 10 mit dem Winkelspiegel 18 um die Wegstrecke x bewegt, so ändert sich die Position des reflektierten Strahles 24, 24'' um 2 x. Der Meßschlitten 14 mit den daran befestigten photoelektrischen Wandlern S1, S2 muß um ein entsprechendes Stück nachgestellt werden, damit die Differenz der Ausgangssignale der Wandler S1, S2 wieder dem vorgegebenen Wert, wie z.B. Null, entspricht.

Die Fig. 5 und 5a illustrieren das bereits anhand der Fig. 3 erläuterte Ausführungsbeispiel unter Verwendung eines Plan-Spiegels 56 mit einem Schattenbalken 58. Wie in den Fig. 5 und 5a dargestellt, ändert sich bei Bewegung des Tastkopfes 10 in Richtung "X" die Intensitätsverteilung der reflektierten Teilstrahlen 60, 62 an den beiden photoelektrischen Wandlern S1, S2, so daß der Schlitten mit den beiden photoelektrischen Wandlern entsprechend nachgeführt werden kann, um die Bewegung des Tastkopfes 10 festzustellen.

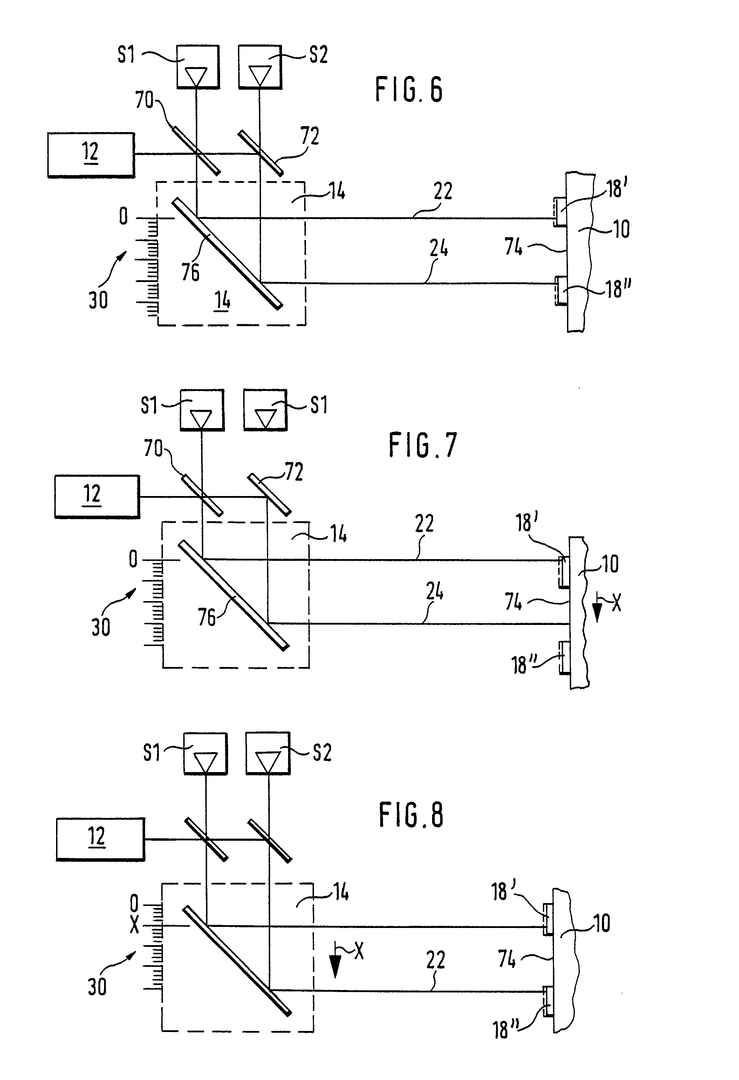

Die Fig. 6, 7 und 8 zeigen eine Variante des Meßverfahrens, bei der die photoelektrischen Wandler S1, S2 nicht fest am bewegbaren Schlitten 14 montiert, sondern ortsfest angeordnet sind. Der Ausgangsstrahl des Lasers 12 trifft auf zwei hintereinander angeordnete halbdurchlässige Spiegel 70, 72 und sodann auf einen Umlenkspiegel 76, der fest am bewegbaren Schlitten 14 montiert ist. In der in Fig. 6 gezeigten Ausgangsstellung werden zwei Teil-Strahlen 22, 24 von den am Tastkopf befestigten Teil-Planspiegeln 18', 18" in sich selbst zurückreflektiert und gelangen nach einer 90°-Umlenkung am Umlenkspiegel 76 auf die beiden photoelektrischen Wandler S1, S2. Die Ausgangssignale der beiden photoelektrischen Wandler S1, S2 sind somit in dieser Stellung gleich groß. Wird gemäß Fig. 7 der Tastkopf 10 in Richtung "X" bewegt, so trifft einer der beiden aufgeteilten Laserstrahlen (der Teilstrahl 24) auf den nichtreflektierenden Bereich 74 zwischen den beiden Spiegeln 18', 18", so daß nur der Teilstrahl 22 zurückreflektiert wird. Somit fällt nur auf den einen photoelektrischen Wandler S1 reflektiertes Licht, während der andere photoelektrische Wandler S2 unbelichtet bleibt. Die Ausgangssignale werden somit unterschiedlich. Der Schlitten 14 wird gemäß Fig. 8 in Richtung "X" um die gleiche Wegstrecke bewegt wie der Tastkopf 10, bis die Differenz der Ausgangssignale der beiden photoelektrischen Wandler S1, S2 wieder gleich ist.

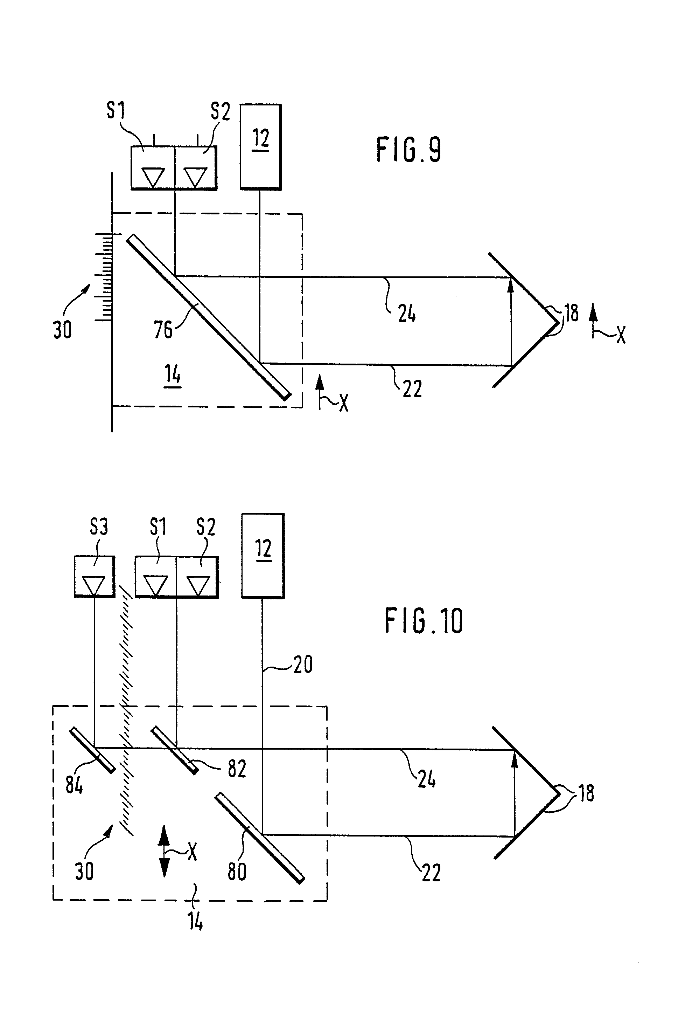

Fig. 9 zeigt ein weiteres Ausführungsbeispiel einer Meßvorrichtung, bei der die beiden photoelektrischen Wandler S1, S2 nicht fest mit dem Schlitten 14 verbunden sondern ortsfest angeordnet sind. Bewegt sich der Tastkopf 10 (nicht gezeigt) mit dem Winkel-Spiegel 18, so wird der reflektierte Strahl 24 wie bei den vorstehend beschriebenen Ausführungsbeispielen versetzt und das Verhältnis der Ausgangssignale der beiden photoelektrischen Wandler S1, S2 ändert sich. Der Schlitten 14 wird entsprechend in X-Richtung bewegt und an der Meßskala 30 läßt sich die Bewegung des Tastkopfes 10 wie beschrieben feststellen.

Die Fig. 10 illustriert eine besondere Meßskalen-Anordnung. Der Ausgangsstrahl 20 des Lasers 12 trifft über einen Umlenkspiegel 80, der fest am Schlitten 14 montiert ist, auf den Winkel-Spiegel 18 des Tastkopfes 10 (nicht gezeigt). Der reflektierte Strahl 24 trifft auf einen halbdurchlässigen Spiegel 82 und wird um 90° auf die beiden Detektoren S1, S2 gelenkt. Die Verarbeitung der Ausgangssignale der photoelektrischen Wandler S1, S2 erfolgt analog zum Ausführungsbeispiel gemäß Fig. 9. Der halbdurchlässige Spiegel 82 läßt einen Teil-Strahl durch, welcher die Meß-Skala 30 passiert und dabei an jedem Teilstrich der Maß-Skala absorbiert wird. Ein Umlenkspiegel 84 lenkt den passierenden Teilstrahl auf einen weiteren photoelektrischen Wandler S3, welcher dazu dient, die Bewegung des Schlittens 14 festzustellen. Wird nämlich der Schlitten 14 entsprechend einer Bewegung des Tastkopfes 10 mit dem Spiegel 18 wie vorstehend erläutert nachgeführt, so wird der durch den halbdurchlässigen Spiegel 82 durchtretende Teil-Strahl durch die Meß-Skala 30 moduliert, was mittels des photoelektrischen Wandlers S3 und einem nachgeschalteten Zähler gemessen wird.

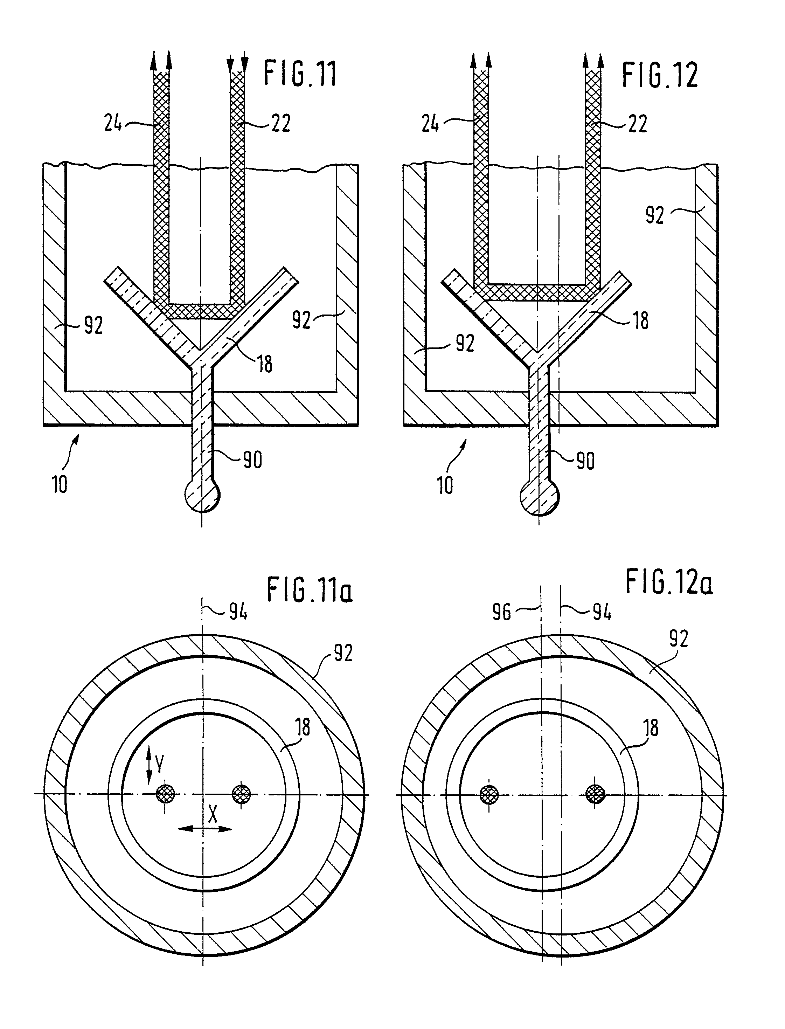

Die Fig. 11 und 12 bzw. 11a und 12a zeigen - schematische Ansichten eines für die vorstehend beschriebene Meßvorrichtung besonders geeigneten Tastkopfes.

Der Tastkopf 10 (s. Fig. 1-3) weist einen Meßtaster 90 auf, welcher mit dem zu vermessenden Werkstück in Anlage gebracht wird. Der Meßtaster 90 ist in einem Tastergehäuse 92 derart federnd gelagert, daß er um die Mittelposition 94 in allen drei Richtungen um etwa ± 5 mm auslenkbar ist. Der Tastkopf 10 kann somit mit relativ hoher Geschwindigkeit an ein Werkstück herangeführt werden und den durch die träge Masse bedingten Stoß völlig ungestört absorbieren. Mit dem Meßtaster 90 ist der Spiegel 18 (s. Fig. 1-10) fest verbunden. Die Reflexion und Auswertung der Strahlen 22, 24 ist anhand der Fig. 1 bis 10 näher beschrieben worden. Wie ein Vergleich der Fig. 11, 11a mit den Fig. 12, 12a zeigt, kann der Meßtaster 90 in bezug auf das von einem Motor (nicht gezeigt) angetriebene Tastergehäuse 92 in die Lage 96 verschoben werden (beim Anstoßen an das zu vermessende Werkstück), ohne daß die Messung beeinflußt wird. Die Fig. 11a und 12a zeigen - schematisch Stirnansichten der relativen Lage zwischen dem Spiegel 18 und dem Tastergehäuse 92. Wie dargestellt, ändert sich zwar die Relativ-Stellung zwischen dem Spiegel 18 und dem Tastergehäuse 92, nicht aber die Relativ-Stellung zwischen den Lichtstrahlen und dem Meßtaster 90 sowie dem mit ihm fest verbundenen Spiegel 18, worauf es für die Genauigkeit der Messung alleine ankommt.

**Ansprüche**

1. Vorrichtung zum Vermessen von insbesondere Werkstücken mit einem Tastkopf (10) zum Abtasten des Werkstückes, einem Antrieb für den Tastkopf (10) und einer Meßeinrichtung (14, 30) zum Bestimmen einer vom Tastkopf zurückgelegten Wegstrecke ( x),
dadurch **gekennzeichnet**,
daß der Tastkopf (10) mit einem Spiegel (18) versehen ist, daß ein elektromagnetischer Strahl (22), wie z.B. ein Laser-Lichtstrahl, auf den Spiegel (18) gerichtet ist und daß die Änderung des reflektierten Strahles (24, 24', 24") bei Bewegung des Tastkopfes (10) mittels zumindest eines photoelektrischen Wandlers (S1, S2) gemessen wird.

2. Vorrichtung zum Positionieren insbesondere eines Werkzeuges mit einem Werkzeugträger, einem Antrieb für den Werkzeugträger und einer Meßeinrichtung zum Bestimmen einer vom Werkzeugträger zurückgelegten Wegstrecke, dadurch **gekennzeichnet**, daß der Werkzeugträger mit einem Spiegel versehen ist, daß ein elektromagnetischer Strahl, wie z.B. ein Laser-Lichtstrahl, auf den Spiegel gerichtet ist und daß die Änderung des reflektierten Strahles bei Bewegung des Werkzeugträgers mittels zumindest eines photoelektrischen Wandlers gemessen wird.

3. Vorrichtung nach einem der Ansprüche 1 oder 2, dadurch **gekennzeichnet**, daß der oder die photoelektrische(n) Wandler (S1, S2) auf einem Schlitten (14) angeordnet ist (sind), daß der Schlitten (14) mit einem Antrieb (26) versehen ist, daß die Position des Schlittens (14) entsprechend der Änderung des reflektierten Strahles - (24, 24', 24") gesteuert wird und daß die vom Schlitten (14) zurückgelegte Wegstrecke ( x) gemessen wird.

4. Vorrichtung nach Anspruch 1 oder 2, dadurch **gekennzeichnet**, daß auf einem Schlitten (14) ein Spiegel (76) befestigt ist, der den vom Tastkopf (10) bzw. Werkzeugträger reflektierten Strahl (24) auf zumindest einen ortsfesten photoelektrischen Wandler (S1, S2) lenkt, daß der Schlitten (14) mit einem Antrieb - (26) versehen ist, daß die Position des Schlittens - (14) entsprechend der Änderung des reflektierten Strahles (24) gesteuert wird und daß die vom Schlitten (14) zurückgelegte Wegstrecke ( x) gemessen wird.

5. Vorrichtung nach einem der Ansprüche 3 oder 4, dadurch **gekennzeichnet**, daß der auf den Tastkopf (10) bzw. den Werkzeugträger gerichtete Strahl vom Schlitten (14) mittels eines am Schlitten (14) angeordneten Spiegels (16) derart reflektiert wird, daß er bei Bewegung des Tastkopfes (10) bzw. Werkzeugträgers seine Einfallsrichtung und/oder seinen Auftreffpunkt in bezug auf den Tastkopf bzw. Werkzeugträger nicht ändert.

6. Vorrichtung nach einem der Ansprüche 3 bis 5, dadurch **gekennzeichnet**, daß am Schlitten (14) ein Spiegel, vorzugsweise ein lageunabhängiger Umlenkspiegel (16), angeordnet ist, der den Laser-Lichtstrahl (20) zum Spiegel (18) des Tastkopfes (10) bzw. des Werkzeugträgers umlenkt, und daß die Bewegungsrichtung (x, y) des Schlittens (14) gleich der Einfallsrichtung des Laser-Lichtstrahles (20) auf den Spiegel (16) des Schlittens (14) ist.

7. Vorrichtung nach einem der Ansprüche 3 bis 6, dadurch **gekennzeichnet**, daß die Bewegungsrichtungen des Tastkopfes (10) bzw. des Werkzeugträgers und des Schlittens (14) parallel sind.

8. Vorrichtung nach einem der Ansprüche 3 bis 7, dadurch **gekennzeichnet**, daß am Schlitten (14) ein Pentaprisma (16) als Spiegel angeordnet ist.

9. Vorrichtung nach einem der vorhergehenden Ansprüche, dadurch **gekennzeichnet**, daß am Tastkopf (10) bzw. Werkzeugträger ein Winkelspiegel oder ein Retroreflektor (18) angeordnet ist.

10. Vorrichtung nach Anspruch 9, dadurch **gekennzeichnet**, daß der vom Spiegel des Tastkopfes (10) bzw. Werkzeugträger reflektierte Strahl (24, 24', 24") parallel zu dem auf diesen einfallenden Strahl (22, 22') verläuft.

11. Vorrichtung nach einem der vorhergehenden Ansprüche, dadurch **gekennzeichnet**, daß als photoelektrischer Wandler (S1, S2) ein Zwei-Quadranten-Detektor vorgesehen ist.

12. Vorrichtung nach einem der Ansprüche 3 bis 11, dadurch **gekennzeichnet**, daß der Schlitten (14) dem sich bei Bewegung des Tastkopfes (10) bzw. Werkzeugträgers ändernden reflektierten Strahl (24, 24', 24") nachgeführt wird.

13. Vorrichtung nach einem der Ansprüche 3 bis 12, dadurch **gekennzeichnet**, daß der Schlitten (14) linear bewegbar ist und daß seine Bewegung relativ zu einer Linear-Meßskala - (30) gemessen wird.

14. Vorrichtung nach einem der Ansprüche 2 bis 13, dadurch **gekennzeichnet**, daß zwei orthogonal zueinander bewegbare Schlitten (14, 14') vorgesehen sind.

15. Vorrichtung nach einem der Ansprüche l bis 14,
dadurch **gekennzeichnet,**
daß der Spiegel (56) am Tastkopf (10) bzw. Werkzeugträger einen Schattenbalken (58) aufweist, daß der auf den Spiegel (56) einfallende Strahl derart aufgeweitet ist, daß er beidseits des Schattenbalkens (58) auftrifft, und daß der reflektierte Doppelstrahl (60, 62) auf einen insbesondere als Zwei-Quadranten-Detektor (S1, S2) ausgebildeten photoelektrischen Wandler trifft.

16. Vorrichtung nach Anspruch 15,
dadurch **gekennzeichnet,**
daß der auf den Spiegel (56) des Tastkopfes (10) einfallende Strahl von einem Strahlteiler (54) reflektiert ist.

17. Vorrichtung nach Anspruch 16,
dadurch **gekennzeichnet,**
daß der Strahlteiler (54) als halbdurchlässiger Spiegel ausgebildet ist, den der reflektierte Doppelstrahl (60, 62) passiert.

18. Vorrichtung nach einem der vorhergehenden Ansprüche,
dadurch **gekennzeichnet,**
daß in jeder Meßrichtung (X, Y) jeweils zwei zumindest annähernd parallele Laser-Strahlen auf den Tastkopf bzw. Werkzeugträger gerichtet werden.

19. Tastkopf für eine Vorrichtung gemäß einem der Ansprüche 1 oder 3-18,
dadurch **gekennzeichnet,**
daß ein Meßtaster (90) starr mit einem Spiegel (18), wie insbesondere einem Winkelspiegel oder Retroreflektor, verbunden ist, daß der Meßtaster (90) in mindestens einer, vorzugsweise drei Meßrichtungen in einem Tastergehäuse (92) federnd um eine Mittellage (94) gelagert ist, und daß das Tastergehäuse (92) mittels eines Antriebs bewegbar ist.

FIG.1

S1
S2

Δx

2Δx

Δx

10

24
24"
24'

28

14

30

18

22'

22

16

20

28

12

26

M

28

28

FIG. 2

FIG.3

0 236 777

# FIG.4

22

S1

S2

2Δx

24

24"

18

Δx

# FIG.4a

63

18

63

S1

S2

60

54

56

10

58

62

S1

S2

54

60

56

62

10

X

# FIG.5

60

58

56

62

# FIG.5a

60

56

62

FIG. 6

FIG. 7

FIG. 8

FIG.9

FIG.10

FIG.11

FIG.12

FIG.11a

FIG.12a

0 236 777

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 084 144 (FIRMA CARL ZEISS)<br><br>* Insgesamt * | 1,4,5, 6,7,9, 10,12, 13,14, 18 | G 01 B 11/03 |
| A | | 3,15, 16,17, 19 | |
| X | DE-A-3 124 357 (DAIMLER BENZ AG)<br><br>* Seite 6, Zeile 1 - Seite 17; Figuren * | 2,4,5, 6,7,9, 10,11, 13 | |
| A | | 15,16, 17,18, 19 | RECHERCHIERTE SACHGEBIETE (Int. Cl.4)<br><br>G 01 B 11/00 |
| X | WO-A-8 403 761 (ERNO RAUMFAHRTECHNIK GmbH)<br><br>* Figur 1; Seite 2, Zeile 4 - Seite 8, Zeile 22 * | 2,3,4, 5,6,7, 9 | |
| A | | 15,16, 17,19 | |
| | --- -/- | | |

Der vorliegende Recherchenbericht wurde für alle Patentansprüche erstellt.

| Recherchenort<br>DEN HAAG | Abschlußdatum der Recherche<br>16-06-1987 | Prüfer<br>BROCK T.J. |
|---|---|---|

Europäisches
Patentamt

**EUROPÄISCHER RECHERCHENBERICHT**

Nummer der Anmeldung

EP 87 10 2035

Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | GB-A-2 162 942 (I.P. ALMANAR) <br><br> * Insgesamt * | 1-7,9, 10-14, 18,19 | |
| A | | 15,16, 17 | |
| | --- | | |
| P,X | DE-A-3 520 693 (JENOPTIK JENA GmbH) <br><br> * Insgesamt * | 1-7,9, 10,12, 13,14, 19 | |
| | --- | | |
| X | EP-A-0 144 546 (CARL ZEISS STIFTUNG) <br><br> * Figuren; Seite 3, Zeile 10 - Seite 5, Zeile 16 * | 2,3,5, 7,9,10 ,12-14 | |
| A | | 4,6,11 ,15,16 ,17,18 ,19 | RECHERCHIERTE SACHGEBIETE (Int. Cl.4) |
| | --- | | |
| X | US-A-4 261 107 (CATERPILLAR TRACTOR CO) <br> * Spalte 2, Zeilen 18-68; Spalte 5, Zeile 10 - Spalte 13, Zeile 5 * | 2-18 | |
| | --- -/- | | |

Der vorliegende Recherchenbericht wurde für alle Patentansprüche erstellt.

| Recherchenort | Abschlußdatum der Recherche | Prüfer |
|---|---|---|
| DEN HAAG | 16-06-1987 | BROCK T.J. |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-4 498 773  (K. VON BIEREN) <br> * Spalte 3, Zeilen 2-4; Figur 1 * <br><br> ----- | 8 | |

RECHERCHIERTE SACHGEBIETE (Int. Cl.4)

Der vorliegende Recherchenbericht wurde für alle Patentansprüche erstellt.

| Recherchenort <br> DEN HAAG | Abschlußdatum der Recherche <br> 16-06-1987 | Prüfer <br> BROCK T.J. |
|---|---|---|